# EUROPEAN PATENT APPLICATION

(11) **EP 4 525 097 A1**
(43) Date of publication of application: **19.03.2025**
(21) Application number: 23803828.5
(22) Date of filing: 10.05.2023
(51) Int. Cl.: H01M 4/66, H01M 4/70, H01M 4/04, H01M 4/02

(54) **CURRENT COLLECTOR FOR ELECTRODE**

(30) Priority: 11.05.2022 KR 20220058035
(71) Applicant: U&S Energy, Inc., Cheonan-si, Chungcheongnam-do 31040 (KR)
(72) Inventor: KIM, Kyung Joon, Seoul 06191 (KR)
(74) Representative: dompatent von Kreisler Selting Werner - Partnerschaft von Patent- und Rechtsanwälten mbB
(86) International application number: PCT/KR2023/006322
(87) International publication number: WO 2023/219405

(57) **Abstract**

A current collector for an electrode, according to one embodiment of the present invention, comprises: a base film; a conductive material layer, which is formed on the upper surface and/or lower surface of the base film and includes a conductive material; and an electrode active material formed on the surface of the conductive material layer, wherein the conductive material layer can include: peeling parts formed by the absence or removal of the conductive material such that the base film is exposed; and a current pass part which is located between the peeling parts, and which has the conductive material on the surface of the base film.

## Description

### [Technical Field]

The present invention relates to a current collector for an electrode, and more particularly, to a current collector for an electrode capable of preventing overheating of a secondary battery when a short circuit occurs and increasing the safety of a secondary battery by removing a portion of a conductive material provided in a base film or removing a portion of the conductive material and an electrode active material to exhibit an electrochemical fuse or physical fuse function in which when a short circuit occurs in a secondary battery including such a current collector for the electrode, a short circuit current path is formed and the short circuit current flows only in a portion where both the electrode active material and the conductive material are present, and in the remaining portion, the short circuit current path is blocked.

### [Background Art]

As technology development and demand for mobile devices increase, the demand for secondary batteries as an energy source is rapidly increasing, and among these secondary batteries, a lithium secondary battery that exhibits high energy density and operating potential and has a low self-discharge rate has been commercialized.

The lithium metal secondary battery is a first commercialized secondary battery, and uses a lithium metal as a negative electrode. However, due to volume expansion of a cell, gradual decreases in capacity and energy density, a short circuit caused by a dendrite continuous growth, a decrease in cycle life and cell stability problems (explosion and ignition) caused by lithium dendrites formed on the surface of a lithium metal negative electrode, the lithium metal secondary battery stopped in production after only a few years of commercialization. Accordingly, a carbon-based negative electrode that is more stable and may stably store lithium in an ion state within a lattice or empty space was used instead of the lithium metal, and the use of the carbon-based negative electrode leads to full-scale commercialization and distribution of the lithium secondary battery.

Until now, the lithium secondary battery has been mainly made of carbon-based or noncarbon-based negative electrode materials, and the development of most negative electrode materials have been concentrated on carbon-based materials (graphite, hard carbon, soft carbon, etc.) and noncarbon-based materials (silicon, tin, titanium oxide, etc.).

Meanwhile, recently, as portable electronic devices and information communication devices have been miniaturized, the lithium secondary battery is greatly expected to be used as an ultra-small power supply system for driving the devices.

Moreover, recently, the development and research of polymer-based electronic devices and elements using advantages of flexibility, low price, and ease of manufacture have been actively conducted. Therefore, in order to be used for miniaturized devices, it is necessary to reduce the thickness or weight of the battery while maintaining the energy density or performance of the lithium secondary battery.

In addition, even if the thickness or weight of the lithium secondary battery is reduced, the safety of the lithium secondary battery should be improved by blocking or destroying a current path when a short circuit occurs.

In particular, in the case of a large-capacity lithium secondary battery capable of storing energy of 2 Ah or more, there is an increasingly need for a battery safety technology capable of reducing or blocking the short circuit current when the short-circuit occurs.

The present applicants have proposed the present invention in order to solve the problems.

As a related prior art, there is Korean Patent Publication No. 10-2006-0102745 (Title of Invention: lithium secondary battery, published date: September 28, 2006).

### [Disclosure]

### [Technical Problem]

The present invention is proposed to solve the above problems, and an object of the present invention is to provide a current collector for an electrode capable of preventing overheating or temperature rise of a secondary battery and increasing the stability of a battery by exhibiting a function of a fuse when an internal or external short circuit occurs while reducing the thickness or weight as compared with a metal foil-made current collector.

In addition, another object of the present invention is to provide a current collector for an electrode capable of preventing the entire current collector for the electrode from reacting with a short circuit and normally operating other portions of the current collector for the electrode other than a portion where the short circuit occurs by isolating or separating the portion where the short circuit occurs from other portions when the short circuit occurs in a large-scale lithium secondary battery.

In addition, yet another object of the present invention is to provide a current collector for an electrode capable of reducing the heat generation of a battery by reducing the area or size of a short circuit occurrence portion of the current collector for the electrode when the short circuit occurs in a large-scale lithium secondary battery to dissipate energy only in a small portion of the current collector for the electrode.

### [Technical Solution]

According to an embodiment of the present invention, there is provided a current collector for an electrode including a base film; a conductive material layer, which is formed on at least one of an upper surface and a lower surface of the base film and includes a conductive material; and an electrode active material formed on the surface of the conductive material layer, in which the conductive material layer includes peeling parts formed by the absence or removal of the conductive material so that the base film is exposed; and a current pass part which is located between the peeling parts and has the conductive material on the surface of the base film.

The peeling parts may be formed by the absence or removal of the conductive material so that at least one surface of the upper and lower surfaces of the base film is exposed or may include the electrode active material which is formed on at least one surface of the upper and lower surfaces of the base film exposed by the absence or removal of the conductive material.

The current pass part may be formed to have the conductive material on at least one surface of the upper and lower surfaces of the base film.

The current pass part may include the electrode active material which is formed on the surface of the conductive material which is present on at least one surface of the upper and lower surfaces of the base film.

The current pass part may be located between the peeling parts along an arrangement direction of the peeling part or located between the peeling parts along a pattern direction formed by connecting the peeling parts and the current pass part.

The area of the conductive material layer or the area of the electrode active material may be divided into a plurality of reaction sections by a pattern line formed by connecting the peeling parts and the current pass part.

When a short circuit occurs in a secondary battery including the current collector for the electrode, a short circuit current may flow into a short circuit occurrence point through the current pass part located around the short circuit occurrence point.

Among the reaction sections, a reaction section where the short circuit occurrence point is located may become a fuse section that functions as an electrical fuse, the current pass part forming the fuse section or the entire current pass part connected to the fuse section may be disconnected, and while all of the current pass parts are disconnected, an electrochemical reaction of the electrode active material present in the fuse section may be performed.

All of the current pass parts forming the fuse section or connected to the fuse section may be disconnected to induce the electrochemical reaction of the electrode active material present in the fuse section while the fuse section is electrically isolated and a short circuit current may flow into the fuse section until the electrochemical reaction is completed.

The peeling parts and the current pass part forming the fuse section or surrounding the fuse section may isolate the fuse section from the reaction section or isolate or separate the fuse section participating in the short circuit reaction from the reaction section, so that a short circuit reaction due to the short circuit current may occur only in the fuse section.

A plurality of peeling parts may be formed on the same line as the pattern line formed by connecting the peeling parts and the current pass part, at least one current pass part may be formed on the same line, and the peeling parts and the current pass part located on the same line may have different lengths or sizes.

The base film may be made of a transparent material.

The peeling parts and the current pass part may be formed to be symmetrical on the upper and lower surfaces of the base film.

The peeling parts and the current pass part may be formed to be symmetrical on the upper and lower surfaces of the base film by laser patterning.

### [Advantageous Effects]

According to the present invention, a current collector for an electrode uses a base film made of an insulator instead of a metal foil and a layer coated or plated with a conductive material is formed on the surface of the base film, thereby reducing the thickness as compared with a metal foil-made current collector.

According to the present invention, when a short circuit occurs in a secondary battery including a current collector for an electrode, a portion where the short circuit occurs in the current collector for the electrode is isolated from other portions to block a short circuit current flowing through the portion where the short circuit occurs, thereby reducing a portion of the current collector for the electrode involved in the short circuit.

According to the present invention, since the current collector for the electrode has a structure equivalent to that of a plurality of divided current collectors for the electrode electrically connected to a lead tab in parallel, only the corresponding divided portion where the short circuit occurred in the current collectors for the electrode is separated to block a short circuit current and thus other portions of the current collectors for the electrode may be continuously used, thereby improving the safety of secondary batteries and extending the service life.

According to the present invention, the current collector for the electrode functions as an electrochemical fuse or a physical fuse by inducing a short circuit current to flow only through a current path around a portion where the short circuit occurs in a plurality of divided current collectors for the electrode and blocking a current path so that the short circuit current does not flow to other portions where the short circuit does not occur, thereby preventing overheating of the battery and increasing the safety of secondary batteries.

According to the present invention, when the current collector for the electrode is applied to a large-scale lithium secondary battery, if the short circuit occurs in the secondary battery, the area or size of the short circuit occurrence portion of the current collector for the electrode is reduced to dissipate energy only in a small portion of the current collectors for the electrode, thereby reducing the heat generation of the secondary battery.

### [Description of Drawings]

FIG. 1 is a perspective view illustrating an electrode assembly including a current collector for an electrode according to an embodiment of the present invention.
FIG. 2 is an exploded perspective view illustrating the electrode assembly of FIG. 1.
FIGS. 3 to 6 are diagrams for describing a current collector for an electrode according to an embodiment of the present invention and a manufacturing method thereof.
FIGS. 7 and 8 are cross-sectional views illustrating the current collector for the electrode illustrated in FIG. 5 taken in a direction perpendicular to peeling parts.
FIGS. 9 and 10 are diagrams illustrating modifications of a current collector for an electrode according to an embodiment of the present invention.
FIGS. 11 to 14 are diagrams for describing the function of a current collector for an electrode when a short circuit occurs in a lithium secondary battery including the current collector for the electrode according to an embodiment of the present invention.

### [Best Mode]

Hereinafter, embodiments of the present invention will be described in detail with reference to the accompanying drawings. However, embodiments of the present invention are not limited or restricted thereto. Like reference numerals presented in each drawing indicate like elements.

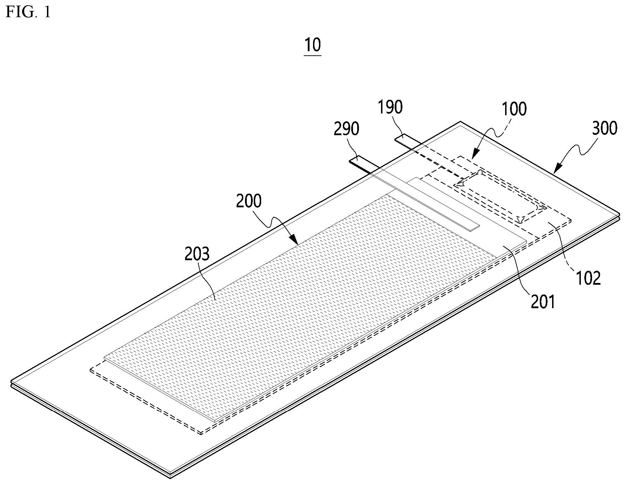

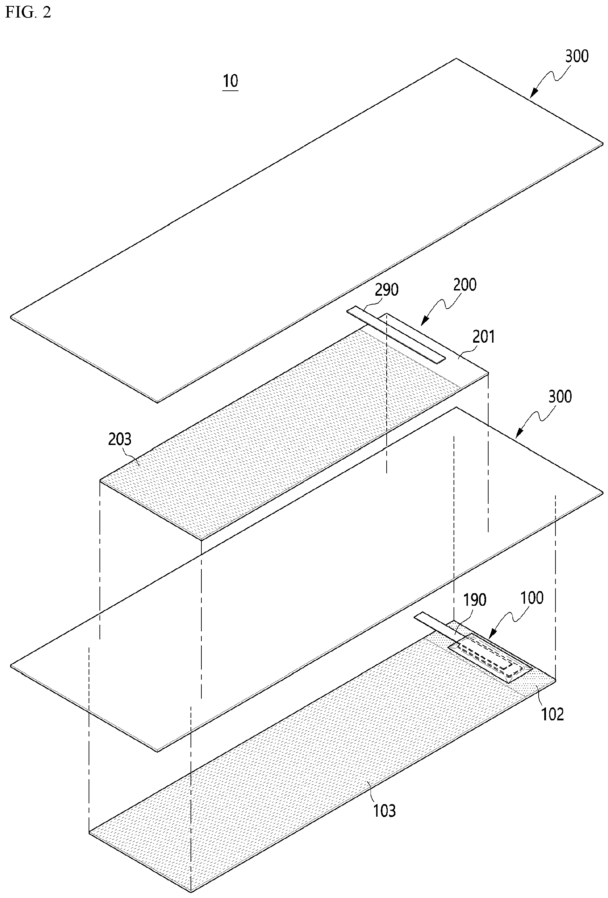

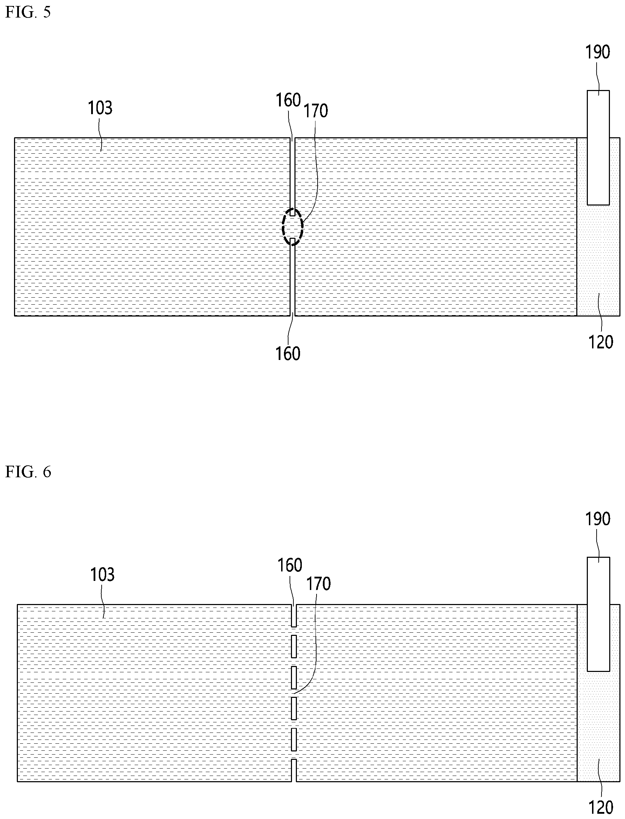

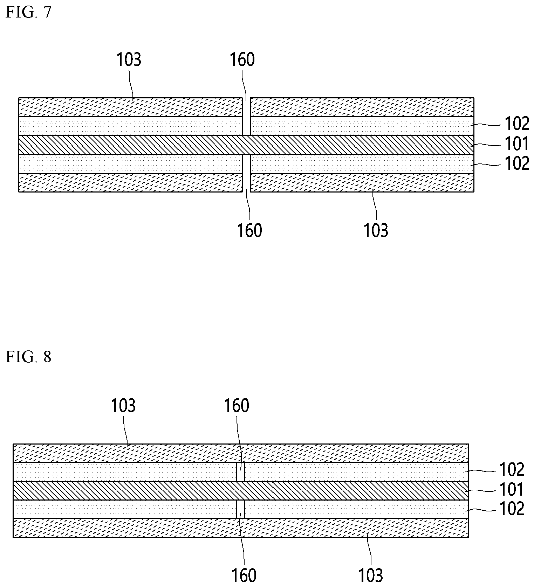

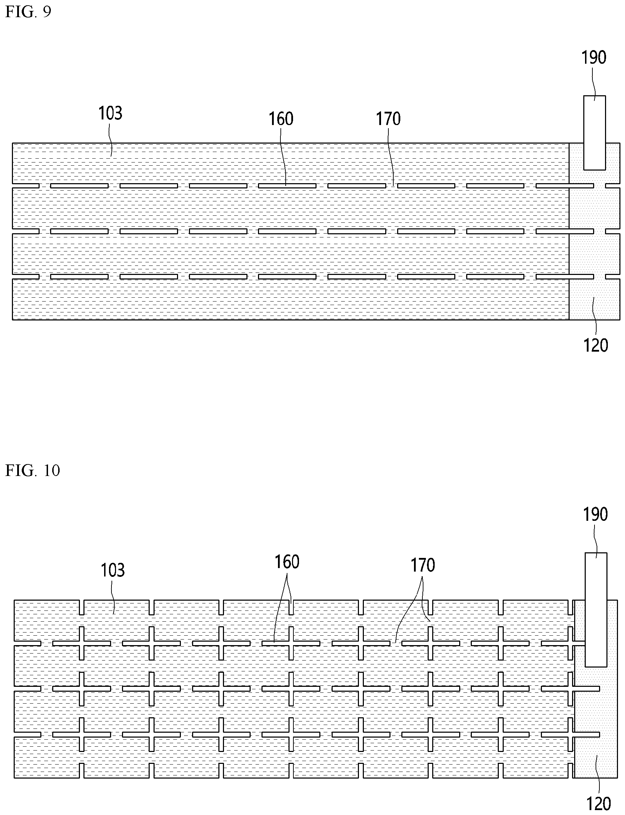

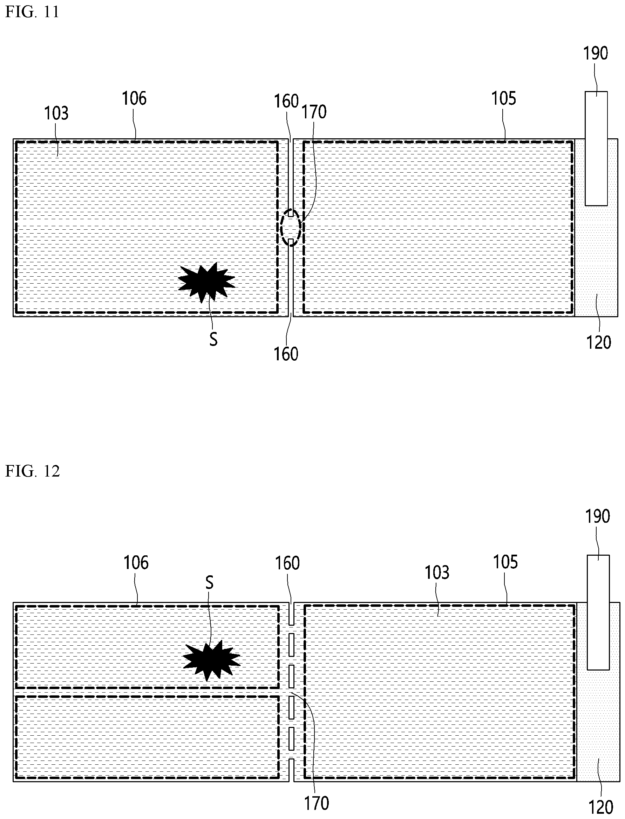

FIG. 1 is a perspective view illustrating an electrode assembly including a current collector for an electrode according to an embodiment of the present invention, FIG. 2 is an exploded perspective view illustrating the electrode assembly of FIG. 1, FIGS. 3 to 6 are diagrams for describing a current collector for an electrode according to an embodiment of the present invention and a manufacturing method thereof, FIGS. 7 and 8 are cross-sectional views illustrating the current collector for the electrode illustrated in FIG. 5 cut in a direction perpendicular to peeling parts, FIGS. 9 and 10 are diagrams illustrating modifications of a current collector for an electrode according to an embodiment of the present invention, and FIGS. 11 to 14 are diagrams for describing the function of a current collector for a positive electrode when a short circuit occurs in a lithium secondary battery including the current collector for the electrode according to an embodiment of the present invention.

A current collector for an electrode according to the present invention is a concept including a current collector for a negative electrode as well as a current collector for a positive electrode used in a secondary battery. Hereinafter, for convenience of description, a case where the current collector for the electrode is the current collector for the positive electrode will be illustratively described.

FIGS. 1 and 2 illustrate an electrode assembly 10 including a current collector 100 for an electrode according to an embodiment of the present invention. In FIGS. 1 and 2, the current collector 100 for the electrode according to an embodiment of the present invention is a current collector for a positive electrode, and in order to be used for the electrode assembly 10, a positive electrode active material 103 needs to be coated or applied to the surface of the current collector 100 for the electrode.

Meanwhile, in a current collector 200 for a negative electrode, a negative electrode active material 203 is coated or applied on a negative electrode metal foil 201 and a negative electrode lead tab 290 may be connected to one end in a longitudinal direction thereof.

A separator 300 may be disposed between the current collector 200 for the negative electrode and the current collector 100 for the electrode according to an embodiment of the present invention. In the state illustrated in FIG. 2, the current collector 200 for the negative electrode and the current collector 100 for the electrode are sequentially stacked up and down with the separator 300 interposed therebetween, respectively, to obtain the electrode assembly 10 illustrated in FIG. 1.

Hereinafter, for convenience of description, the case where the current collector 100 for the electrode is the current collector for the positive electrode will be mainly described.

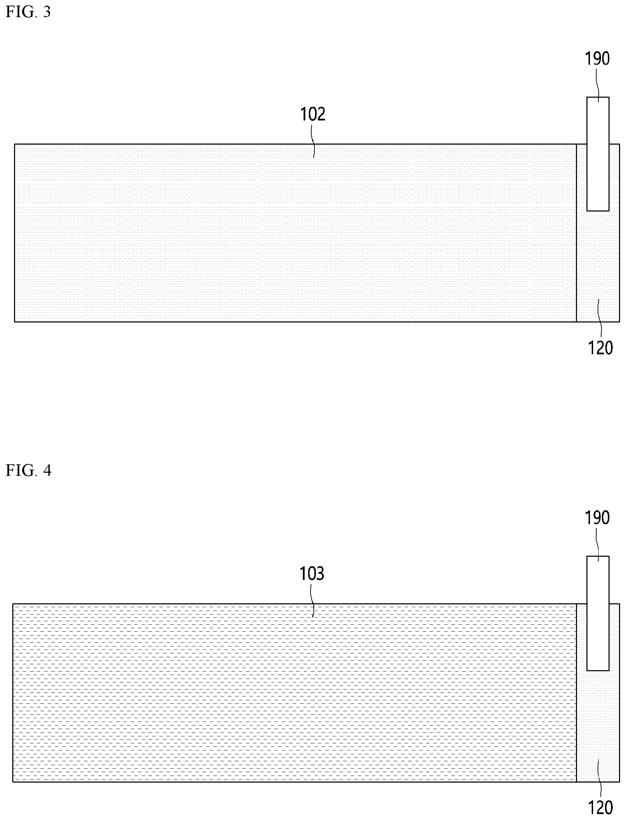

In FIGS. 3 to 14, the current collector 100 for the positive electrode according to an embodiment of the present invention is illustrated. The current collector 100 for the positive electrode does not use a metal foil, unlike the current collector 200 for the negative electrode described above.

Since the current collector 100 for the electrode according to an embodiment of the present invention has a large resistance value greater than the resistance of a current collector made of a metal foil, a limit current value of a current flowing through the current collector for the electrode may be adjusted and the current flow may be interrupted by damage to the base film, so that it is possible to lower a short circuit current or reduce heat generation when an internal short circuit of a secondary battery occurs.

A lithium secondary battery including the current collector 100 for the electrode according to an embodiment of the present invention may have a characteristic or concept of a max current limited battery (MCLB). Hereinafter, the current collector 100 for the electrode according to an embodiment of the present invention that enables the implementation of MCLB will be described.

The current collector 100 for the electrode according to an embodiment of the present invention is the current collector for the positive electrode and has a higher resistance value than the resistance of a current collector for a positive electrode of a conventional secondary battery, that is, a current collector for a positive electrode made of a metal foil. Accordingly, it is possible not only to adjust a limit current, but also to increase the safety of the secondary battery by blocking or collapsing the current path when an internal short circuit occurs to lower the short circuit current or reduce the heat generated during a short circuit.

The current collector 100 for the electrode according to an embodiment of the present invention uses a base film 101 as a basic material without using a metal foil, and is characterized by applying or coating a small thickness of metal on the base film 101.

Referring to FIGS. 3 to 8, the current collector 100 for the electrode according to an embodiment of the present invention may include a base film 101; a conductive material layer 102 formed on at least one of upper and lower surfaces of the base film 101 and including a conductive material; and an electrode active material 103 formed on the surface of the conductive material layer 102.

Here, since the conductive material layer 102 may include peeling parts 160 formed by the absence or removal of the conductive material such that the surface of the base film 101 is exposed, and a current pass part 170 located between the peeling parts 160 along an arrangement direction or pattern direction of the peeling parts 160. The electrode active material 103 may also be coated or applied so as to cover the peeling parts 160 in which the conductive material is not present in the conductive material layer 102.

Referring to FIGS. 3, 4, 7 and 8, the current collector 100 for the electrode according to an embodiment of the present invention may include a base film 101 which is a base of the current collector 100; a conductive material layer 102 formed on at least one of upper and lower surfaces of the base film 101; and an electrode active material 103 formed on the surface of the conductive material layer 102.

If the current collector 100 for the electrode is a current collector for a positive electrode or cathode, the conductive material layer 102 is formed by applying (coating) an aluminum (Al) metal conductive material, and the electrode active material 103 may be used with an active material for a positive electrode.

On the other hand, if the current collector 100 for the electrode is a current collector for a negative electrode or anode, the conductive material layer 102 is formed by applying (coating) a copper (Cu) metal, and the electrode active material 103 may be used with an active material for a negative electrode.

FIG. 3 is a plan view of the current collector 100 for the positive electrode while the conductive material layer 102 of the aluminum metal conductive material is formed on the surface of the base film 101, and FIG. 4 is a plan view of the current collector 100 for the positive electrode while the electrode active material 103 (the active material of the positive electrode) is formed on the surface of the conductive material layer 102 as illustrated in FIG. 3.

In the current collector 100 for the electrode according to an embodiment of the present invention, the current collector 100 for the positive electrode illustrated in FIG. 4 is not used as it is, but may be used while a portion of the conductive material forming the conductive material layer 102 is removed, or both the conductive material and a portion of the electrode active material 103 are removed.

The base film 101 may be provided in a band shape to have a predetermined length. Here, the base film 101 needs to be provided with a non-conductive material, such as polyethylene (PE), polypropylene (PP), polybutylene terephthalate (PBT), polyimide (PI), polymethylpentene (PMP) or polyethylene terephthalate (PET).

The base film 101 has a thickness of 50 µm or less, preferably a thickness of 1.4 µm or more and 50 µm or less. The current collector 100 for the positive electrode according to an embodiment of the present invention may reduce the thickness or weight of the battery compared to a case of using a conventional metal foil current collector. However, by using a non-conductive base film 101 having a thickness of 1.4 µm or more and 50 µm or less as a basic configuration of the current collector 100 for the positive electrode, it is possible to reduce the overall thickness or weight of a lithium secondary battery including the current collector 100 for the positive electrode according to an embodiment of the present invention.

Further, in the current collector 100 for the electrode according to an embodiment of the present invention, in the state illustrated in FIG. 3, that is, in the state where the conductive material layer 102 is formed (coated or applied) on the upper surface or the lower surface of the base film 101, a portion of the conductive material forming the conductive material layer 102 is removed to form peeling parts 160 and then the electrode active material 103 is formed on the upper surface of the peeling parts 160 so as to cover the peeling parts 160. Alternatively, in the state illustrated in FIG. 4, that is, in the state where both the conductive material layer 102 and the electrode active material 103 are formed on the upper surface or the lower surface of the base film 101, the conductive material and a portion of the electrode active material 103 are fully removed or removed at once to form the peeling parts 160, and thus it is preferred that the base film 101 is formed at a thickness of 7 µm or more and 50 µm or less. As such, only when the thickness of the base film 101 is 7 µm or more and 50 µm or less, in a process of forming the peeling parts 160 by removing only the conductive material of the conductive material layer 102 or removing the conductive material and the electrode active material 103 at once, the base film 101 may be maintained in an original shape without melting or breaking.

The present inventors performed repeated experiments to derive the optimal thickness of the base film 101 of the current collector 100 for the electrode according to an embodiment of the present invention, and the results were shown in Tables 1 and 2.

**[Table 1]**

| | Photograph of current collector for electrode | Experiment Result |
|---|---|---|
| Experiment 1 | 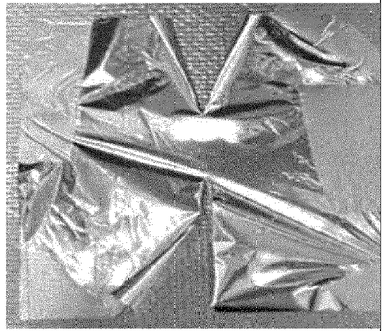 | Base film is broken |
| Experiment 2 | 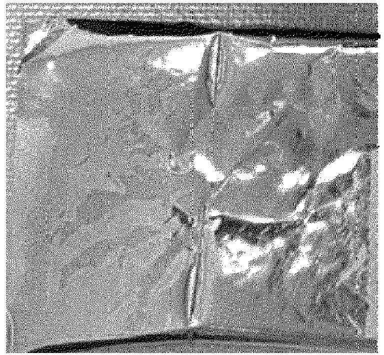 | Base film is not broken |
| Experiment 3 | 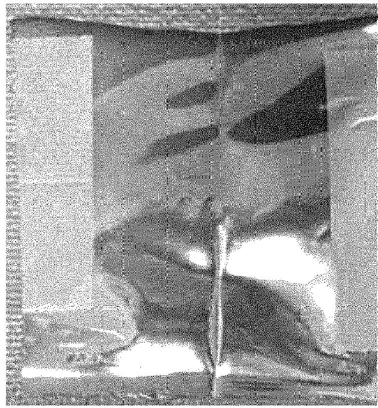 | Base film is not broken |

Table 1 shows results of experimenting whether the base film is broken when forming the peeling parts by removing the aluminum conductive material using a laser for the current collector for the positive electrode in which the conductive material layer made of the aluminum conductive material is coated or applied on the upper surface or lower surface of the base film 101. With respect to the current collector for the positive electrode in which the thickness of the base film is 5 µm (Experiment 1), 7 µm (Experiment 2), and 12 µm (Experiment 3), Table 1 shows a photograph of a current collector for a positive electrode in which peeling parts are formed by removing an aluminum conductive material with a laser under conditions that the laser power is 60% and the speed is 300 mm/s. Referring to Table 1, in the case of Experiment 1, the base film was completely broken at a part where peeling parts were formed. On the other hand, in the case of Experiments 2 and 3, the base film was not broken at the part where peeling parts were formed.

**[Table 2]**

| | Photograph of current collector for electrode | Loupe photograph of peeling parts |
|---|---|---|
| Experiment 2 | 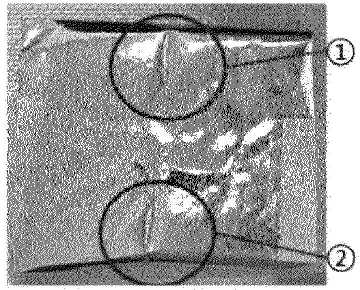 | 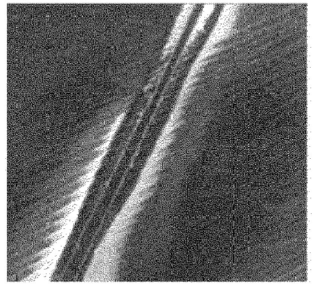 |
| | | 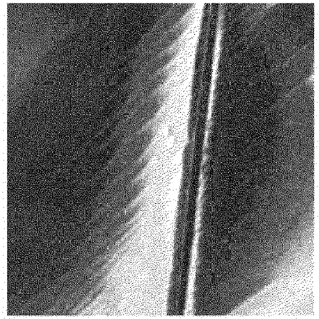 |
| Experiment 3 | 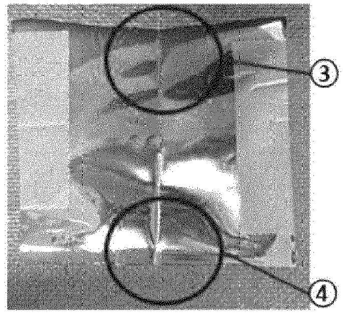 | 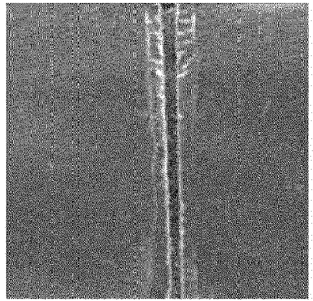 |
| | | 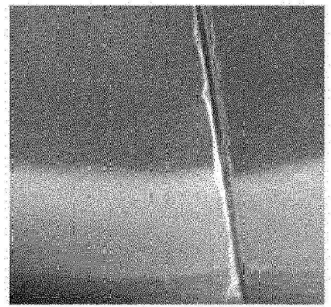 |

Table 2 shows a photograph of peeling parts of the current collector for the positive electrode in Experiment 2 in which the thickness of the base film is 7 µm and a photograph of peeling parts of the current collector for the positive electrode in Experiment 3 in which the thickness of the base film is 12 µm. Referring to a photograph of peeling parts ① and ② observed with a Loupe in the case of Experiment 2, and a photograph of peeling parts ③ and ④ observed with a Loupe in the case of Experiment 3, it may be seen that the shape of the current collector for the positive electrode is maintained because the base film is connected without breaking or melting.

**[Table 3]**

| | Photograph of current collector for electrode | Loupe photograph of peeling parts |
|---|---|---|
| Experiment 4 | 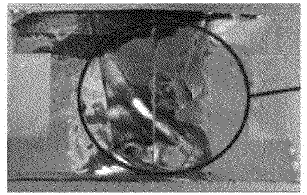 | 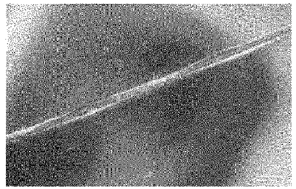 |

Experiment 4 of Table 3 shows results of experimenting whether the base film is broken when forming the peeling parts using a laser for the current collector for the negative electrode in which the conductive material layer made of the copper conductive material is coated or applied on the upper surface or lower surface of the base film 101. Table 3 shows a photograph of a current collector for a negative electrode in which peeling parts are formed by removing a copper conductive material with a laser under conditions that the laser power is 60% and the speed is 300 mm/s and a photograph of observing the peeling parts with a Loupe with respect to a current collector for a negative electrode in which the thickness of the base film is 7 µm. Referring to a photograph of the peeling parts observed with a Loupe in the case of Experiment 4, it may be seen that the base film is connected without breaking or melting and thus the shape of the current collector for the negative electrode is maintained.

As may be seen in Tables 1 to 3, in the current collector 100 for the electrode according to an embodiment of the present invention, when the base film 101 is formed at a thickness of 7 µm or more and 50 µm or less, the base film 101 has a tensile strength that allows a process of forming peeling parts with a laser.

When forming peeling parts using a laser, a transparent material may use the property of a laser to penetrate, and thus if the base film is a transparent material, only the metal and electrode parts may be melted, and the transparent part, that is, the base film made of the transparent material may be not melted but maintained by transmitting the laser. However, the heat generated when the metal and electrode parts are melted may affect the base film made of the transparent material, but the thinner the base film, the greater the effect, so that the base film may be broken. Therefore, when forming peeling parts using a laser, the base film needs to be made of a transparent material and preferably has a thickness of 7 µm or more and 50 µm or less.

Referring to FIGS. 3, 4, 7 and 8, the current collector 100 for the electrode according to an embodiment of the present invention includes a base film 101 and a conductive material layer 102 provided on the surface (upper or lower surface) of the base film 101.

When the current collector 100 for the electrode is a current collector for a positive electrode, the conductive material layer 102 may be provided with an aluminum (Al) metal conductive material.

The conductive material layer 102 may be formed to adjust or lower the limit current or maximum current of the current collector 100 for the electrode. When the current collector 100 for the electrode is a current collector for a positive electrode, the conductive material layer 102 may include an aluminum (Al) metal conductive material plated or coated on the surface (at least one of the upper and lower surfaces) of the base film 101 to control the conductivity of the current collector 100 for the positive electrode. Hereinafter, the conductive material layer 102 is a concept including a conductive material.

By controlling the coating amount or the coating thickness of the conductive material layer 102 to be plated (coated) or deposited on the surface of the base film 101, it is possible to control or lower a maximum amount of current flowing through the current collector 100 for the electrode, thereby increasing the safety of a lithium secondary battery and securing the safety of the lithium secondary battery during a short circuit.

In other words, the limit current or maximum current flowing through the current collector 100 for the electrode may be adjusted by the thickness or amount of the conductive material layer 102 formed on the surface of the base film 101. As such, the nature or concept of a max current limited battery (MCLB) of the lithium secondary battery may be implemented by the conductive material layer 102 of the current collector 100 for the electrode according to an embodiment of the present invention.

In addition, when a physical internal short circuit or external short circuit occurs, the base film 101 may be melted to interrupt rapid generation of the current, thereby improving the safety of the battery.

The conductive material layer 102 may be formed on the surface of the base film 101 by various methods. For example, in the case of a current collector for a positive electrode, the conductive material layer 102 may be formed on at least one of the upper and lower surfaces of the base film 101 by sputtering or evaporation coating an aluminum metal conductive material. Since aluminum is easily oxidized, it is not easy to form the conductive material layer 102 on the surface of the base film 101 by electroplating.

Since the conductive material layer 102 may control the conductivity of the current collector 100 for the electrode or secure the safety of the battery by the amount (weight) or thickness of the conductive material to be coated, it is necessary to use a plating or coating method that may control or adjust the thickness or amount (weight) of the conductive material layer 102.

The conductive material layer 102 may be formed on only one of the upper and lower surfaces of the base film 101, or may also be formed on both surfaces. At this time, the conductive material layer 102 is preferably formed at a thickness of 0.3 µm based on a minimum cross section and 2.5 µm based on a maximum cross section.

The current collector 100 for the electrode according to an embodiment of the present invention allows a current flow by the conductive material layer 102, so that it is necessary to maintain well the state where the conductive material layer 102 is coated or applied on the surface of the base film 101. To this end, it is preferred to increase the binding force between the conductive material layer 102 and the base film 101 by surface-treating the base film 101.

When the binding force between the conductive material layer 102 and the base film 101 is not good, the conductive material layer 102 may be separated or detached from the surface of the base film 101 while an electrolyte is injected, so that it is important to increase the binding force between the conductive material layer 102 and the base film 101.

Surface treatment may be formed on the surface of the base film 101 to increase adhesive force or binding force with the conductive material layer 102.

In order to increase the binding force between the conductive material layer 102 and the base film 101, it is preferred to perform corona treatment on the surface of the base film 101.

Referring to FIGS. 3 and 4, the current collector 100 for the electrode according to an embodiment of the present invention may include a lead tab 190 for electric connection with an external device.

In a current collector for the electrode made of a conventional metal foil, the lead tab may be directly welded to the metal foil, but in the current collector 100 for the electrode according to an embodiment of the present invention, it is impossible or difficult to weld the lead tab directly to the base film 101 using the base film 101 instead of the conventional metal foil.

In the current collector 100 for the electrode according to an embodiment of the present invention, the metal piece 120 is additionally located on both surfaces of the base film 101 or on one surface to which the lead tab 190 is connected, and the lead tab 190 is welded to the metal piece 120, thereby solving the problems.

The metal piece 120 is located on one surface to which the lead tab 190 is attached or on both surfaces of the base film 101, and the lead tab 190 is welded to the metal piece 120 to connect the lead tab 190 to the current collector 100 for the electrode, but when the base film 101 is not melted at a temperature lower than the welding temperature of the lead tab 190, the lead tab 190 may not be bonded. Therefore, it is preferred that the base film 101 has a melting point enough to be melted in the process of welding the lead tab 190.

As illustrated in FIGS. 3 and 4, the metal piece 120 may be provided on only one surface of the both surfaces of the base film 101, or may be provided on both surfaces of the base film 101.

The metal piece 120 may serve to secure a position for welding the lead tab 190 on the base film 101. That is, the metal piece 120 may serve as a connection part of the lead tab 190.

The metal piece 120 is preferably formed to have a thickness of 5 µm or more.

As described above, the metal piece 120 preferably has a shape of a metal thin film or metal foil having a thickness of 5 µm or more, but is not necessarily limited to such a shape. That is, the metal piece 120 may be provided in the form of a thin film, a foil, or a mesh.

The metal piece 120 is preferably made of an aluminum foil or SUS 316L foil in the case of a positive electrode. The metal piece 120 is preferably made of Cu, Ni, and SUS foils in the case of a negative electrode.

In the current collector 100 for the electrode according to an embodiment of the present invention, the lead tab 190 may be welded to the metal piece 120 by ultrasonic welding, laser welding, or spot welding.

The metal piece 120 for connecting the lead tab 190 may also be provided only on one surface of the base film 101. At this time, the conductive material layer 102 may be located between the lead tab 190 and the metal piece 120. That is, the conductive material layer 102 is first applied or coated on the upper surface and the lower surfaces of the base film 101, and then the metal piece 120 may be located on the conductive material layer 102 to be electrically connected with the conductive material layer 102 or the metal piece 120 may be provided to be in contact with the conductive material layer 102.

When welding the lead tab 190 to the metal piece 120 provided on at least one of both surfaces of the base film 101, the base film 101 is melted, so that the metal pieces 120 provided on both surfaces of the base film 101 are connected to each other, and as a result, the lead tab 190 may be electrically connected with the conductive material layers 102 provided on both surfaces of the base film 101 at the same time.

While the metal piece 120 and the conductive material layer 102 are provided on both upper and lower surfaces of the base film 101, the lead tab 190 is ultrasonic-welded, laser-welded, or spot-welded to the metal piece 120 provided on the upper surface of the base film 101 so that a portion of the base film 101 may be melted. If the temperature of welding heat generated when welding the lead tab 190 is higher than a melting point of the base film 101, the base film 101 may be melted during the welding process.

As such, since the base film 101 does not exist in the portion where the base film 101 is melted, the upper and lower metal pieces 120 may be in direct contact with each other. At this time, since the metal piece 120 is also melted by the welding heat, the upper and lower metal pieces 120 are bonded to each other. Therefore, since the upper and lower metal pieces 120 are directly melt-bonded to each other in the portion where the base film 101 is melted and then disappears, the lead tab 190 welded to any one metal piece 120 may be electrically connected to the conductive materials of the conductive material layers 102 formed on the upper and lower surfaces of the base film 101 as well as the upper and lower metal pieces 120.

In the current collector 100 for the electrode according to an embodiment of the present invention, even if a portion of the base film 101 is melted by the welding heat, the metal piece 120 is maintained to be connected to the base film 101, so that the lead tab 190 may be connected.

However, in some cases, the lead tab 190 may be welded to the metal piece 120 even while the base film 101 is not melted.

Meanwhile, in the current collector 100 for the electrode according to an embodiment of the present invention, the electrode active material 103 may be applied on the surface of the conductive material layer 102. The electrode active material 103 is applied on the surface of the conductive material layer 102, and then pressed on the surface of the electrode active material 103 in order to tightly bond the conductive material layer 102 and the electrode active material 103.

The current collector 100 for the electrode according to an embodiment of the present invention may control or lower the maximum amount of current flowing through the current collector 100 for the electrode by adjusting the thickness or amount of the conductive material layer 102 formed on the upper or lower surface of the base film 101. As a result, it is possible not only to increase the safety of the lithium secondary battery including the current collector 100 for the electrode, but also to prevent the lithium secondary battery from exploding by providing the peeling parts 160 and the current pass part 170, which will be described below, to isolate the part where a short circuit occurs from other parts and reduce the temperature rise in the event of a short circuit.

Referring to FIGS. 5 to 14, the current collector 100 for the electrode according to an embodiment of the present invention may include peeling parts 160 formed by removing the conductive material of the conductive material layer 102 provided on the upper or lower surface of the base film 101 and a current pass part 170 located between the adjacent peeling parts 160.

The peeling part 160 is a part formed by removing a portion of the conductive material of the conductive material layer 102 formed on the surface of the base film 101, and a part where the surface of the base film 101 is exposed because there is no conductive material layer 102 or conductive material. The current pass part 170 is a part located between neighboring peeling parts 160 and a part where the surface of the base film 101 is not exposed because the conductive material 120 and the electrode active material 103 exist in the original state.

Here, the peeling parts 160 may be provided in two forms, one thereof is a case where only the conductive material of the conductive material layer 102 formed on the surface of the base film 101 is removed and the electrode active material 103 is not removed but remains as it is. That is, after the conductive material of the conductive material layer 102 formed on the surface of the base film 101 is partially removed, the electrode active material 103 is formed on the surface of the conductive material layer 102 in the state. In this case, the surface of the base film 101 located in the peeling parts 160 is covered with the electrode active material 103. That is, the electrode active material 103 covers the peeling parts 160.

The other form of the peeling parts 160 is a form in which the conductive material of the conductive material layer 102 formed on the surface of the base film 101 and a portion of the electrode active material 103 are integrally removed at once. In this case, the surface of the base film 101 located in the peeling parts 160 is exposed. That is, the surface of the base film 101 is exposed through the peeling parts 160.

Referring to FIGS. 5 to 14, when the peeling parts 160 and the current pass parts 170 are connected to each other, a predetermined pattern is formed. As illustrated in FIG. 4, while both the conductive material layer 102 and the electrode active material 103 are applied on the surface of the base film 101, the conductive material of the conductive material layer 102 and the electrode active material 103 are integrally removed along the predetermined pattern to form the peeling parts 160, thereby obtaining the current collector 100 for the electrode illustrated in FIGS. 5 to 14.

As described above, the peeling parts 160 may be formed in the state where the conductive material of the conductive material layer 102 and the electrode active material 103 are integrally removed at once so that the base film 101 is exposed, or formed in the state where only the conduction material is removed and then the electrode active material 103 covers the portion where the conductive material is removed, so that the base film 101 is not exposed.

On the other hand, in the current pass part 170 located between the peeling parts 160, both the electrode active material 103 and the conductive material layer 102 are present, or the electrode active material 103 is not present, but the conductive material layer 102 is present, so that the surface of the base film 101 is not exposed. That is, since at least the conductive material layer 102 is present in the current pass part 170, the base film 101 is not exposed. When the current collector 100 for the electrode is used for the lithium secondary battery, the current does not flow through the peeling parts 160 in which the conductive material of the conductive material layer 102 is not present and the electrode active material 103 is present, and the peeling parts 160 in which the electrode active material 103 and the conductive material are not present. The current flows only through the current pass part 170 where at least the conductive material layer 102 is present.

At this time, in the peeling parts 160 where the conductive material layer 102 is not present and only the electrode active material 103 is present, the current may flow weakly due to resistance of the electrode active material 103, but when the current collector 100 for the electrode according to an embodiment of the present invention is the current collector for the positive electrode, the resistance of the positive electrode active material is high, and thus the amount of current that may flow through the positive electrode active material 103 rather than the conductive material layer is inevitably very small.

In the current collector 100 for the electrode illustrated in FIG. 5, two peeling parts 160 are formed on both sides along a width direction of the base film 101, and one current pass part 170 is formed between the peeling parts 160. When the peeling parts 160 and the current pass part 170 are connected, a straight pattern is formed. The current collector 100 for the electrode may be divided into left and right sides based on the straight pattern. When the current collector 100 for the electrode is used for the lithium secondary battery, the current flows through the current pass part 170 on both left and right sides of the pattern.

In the current collector 100 for the electrode illustrated in FIG. 6, six peeling parts 160 are formed along a width direction of the base film 101, and five current pass parts 170 are formed between the peeling parts 160. When the peeling parts 160 and the current pass parts 170 are connected, a straight pattern is formed. Similarly, when the current collector 100 for the electrode is used for the lithium secondary battery, the current flows through the current pass parts 170 on both left and right sides of the pattern. In the case of FIG. 6, the peeling parts 160 are formed in the form of dotted lines.

FIGS. 7 and 8 illustrate cross-sectional views of the current collector 100 for the electrode illustrated in FIG. 5. FIG. 7 illustrates a cross section of the current collector 100 for the electrode in which the peeling parts 160 are formed in the state in which both the conductive material layer 102 and the electrode active material 103 are formed on the upper and lower surfaces of the base film 101. In the case of FIG. 7, in the peeling parts 160, since both the conductive material layer 102 and the electrode active material 103 are removed, the surface of the base film 101 located at the peeling parts 160 is exposed. That is, the surface of the base film 101 is exposed through the peeling parts 160.

FIG. 8 illustrates the peeling parts 160 in which the conductive material layer 102 has been removed and is not present and only the electrode active material 103 is present. When the current collector 100 for the electrode according to an embodiment of the present invention is the current collector for the positive electrode illustrated in FIG. 8, because the resistance of the positive electrode active material 103 is large, the amount of current that may flow through the positive electrode active material 103 rather than the conductive material layer is inevitably very small.

When both the conductive material layer 102 and the electrode active material 103 are formed on both the upper and lower surfaces of the base film 101, it is preferred that the peeling parts 160 are formed symmetrically on the upper and lower surfaces of the base film 101.

In the current collector 100 for the electrode according to an embodiment of the present invention, the peeling parts 160 and the current pass part 170 may be performed by performing a patterning process on the current collector 100 for the electrode illustrated in FIG. 4 using a laser.

In order to remove the conductive material layer 102 and the electrode active material 103 on the upper surface and the lower surface of the base film 101, the laser is irradiated to the upper surface of the base film 101 to form the peeling parts 160 on the upper surface, and the laser is irradiated to the lower surface of the base film 101 again to form the peeling parts 160 on the lower surface. That is, the laser needs to be irradiated from the upper and lower surfaces of the base film 101, which is not efficient in the process. In order to increase process efficiency, the current collector 100 for the electrode according to an embodiment of the present invention includes the base film 101 made of a transparent material, and when a laser is irradiated from either the upper or lower surface of the base film 101, the laser passes through the base film 101 made of the transparent material, thereby forming peeling parts 160 simultaneously on the irradiated surface and the opposite surface. That is, because the base film 101 is transparent, the laser passes through the base film 101 to form peeling parts 160 and a current pass part 170 to be symmetrical on both the upper and lower surfaces of the base film 101.

In addition, in the current collector 100 for the electrode according to an embodiment of the present invention, the base film 101 is made of a transparent material and has a thickness of 7 µm or more and 50 µm or less, thereby preventing the base film 101 from being damaged such as melting or breaking by the laser.

In addition, the base film 101 of the current collector 100 for the electrode according to an embodiment of the present invention is preferably formed of a material having a high melting point enough not to be melted even when irradiated with the laser.

As such, in the case of the current collector 100 for the electrode according to an embodiment of the present invention, the peeling parts 160 and the current pass part 170 may be formed to be symmetrical on the upper and lower surfaces of the base film 101 by laser patterning. The peeling parts 160 and the current pass part 170 may be formed to be symmetrical on the upper and lower surfaces of the base film 101.

If the conductive material layer 102 and the electrode active material 103 are formed only on either the upper or lower surface of the base film 101, the peeling parts 160 and the current pass parts 170 may be formed only on one surface of the base film 101.

The current collector 100 for the electrode illustrated in FIG. 9 is formed with the peeling parts 160 and the current pass parts 170 formed along a longitudinal direction of the base film 101. In the case of FIG. 9, the peeling parts 160 and the current pass parts 170 may also be formed in a portion where the lead tab 190 is connected.

In the current collector 100 for the electrode illustrated in FIG. 10, the peeling parts 160 and the current pass parts 170 are formed in a mesh (lattice) shape over the entire area of the electrode active material 103 applied on the base film 101. In the case of FIG. 10, the peeling parts 160 and the current pass parts 170 may be formed even in a portion where the lead tab 190 is connected.

In the current collector 100 for the electrode illustrated in FIGS. 5 to 10, the peeling parts 160 and the current pass parts 170 may be formed to be symmetrical on the upper and lower surfaces of the base film 101 by laser patterning.

When the current collector 100 for the electrode illustrated in FIGS. 5 to 10 is used as a battery element constituting the lithium secondary battery, there is no problem in operating the battery. This is because the current flows through the current pass part 170, and the electrode active material 103 and the conductive material of the conductive material layer 102 connected with the current pass part 170.

When the short circuit occurs in the lithium secondary battery in which the current collector 100 for the electrode according to an embodiment of the present invention is used as the battery element, the safety of the battery may be ensured by minimizing a short circuit occurrence part or by blocking or isolating a non-short circuit occurrence part from the short circuit occurrence part by the peeling parts 160 and the current pass part 170.

Hereinafter, when a short circuit occurs in a lithium secondary battery in which the current collector 100 for the electrode according to an embodiment of the present invention is used as a battery element, the function of the current collector 100 for the electrode will be described with reference to FIGS. 11 to 14.

Referring to FIG. 11, in the current collector 100 for the electrode, the area of the conductive material layer 102 or the electrode active material 103 may be divided into two reaction sections 105 on the left and right sides by a straight pattern line formed by connecting the peeling parts 160 and the current pass part 170. That is, the conductive material layer 102 or the electrode active material 103 may be divided into two reaction sections 105 on both sides based on the pattern line connecting the peeling parts 160 and the current pass part 170. Here, the reaction section 105 may be regarded as a region formed by dividing the region of the current collector 100 for the electrode.

When the short circuit occurs in the left reaction section 105 based on the pattern line in the current collector 100 for the electrode illustrated in FIG. 11, the electric resistance of a short circuit occurrence point S or a reaction section 105 of the short circuit occurrence point S decreases, so that a short circuit current flows to the reaction section 105 where the short circuit occurrence point S is located.

However, the current flowing from the reaction section 105 in which the short circuit does not occur to the reaction section 105 including the short circuit occurrence point S has no choice but to pass through the current pass part 170. That is, when the short circuit occurs in the secondary battery including the current collector for the electrode, the short circuit current may flow to the short circuit occurrence point S or to the reaction section 105 including the short circuit occurrence point S through the current pass part 170 located around the short circuit occurrence point S.

Here, the pattern line connecting the peeling parts 160 and the current pass part 170 located around the short circuit occurrence point S may form a fuse section 106 surrounding the short circuit occurrence point S. That is, among the reaction sections 105 divided by the pattern line, the reaction section 105 including the short circuit occurrence point S may become a fuse section 106 that functions or operates as an electrical fuse.

The current pass part 170 forming the fuse section 106 or the entire current pass part 170 connected to the fuse section 106 is disconnected. All of the current pass parts 170 forming the fuse section 106 or connected to the fuse section 106 need to be disconnected so that the fuse section 106 is electrically disconnected and an electrochemical reaction may occur only in the fuse section 106. After all of the current pass parts 170 are disconnected, a short circuit current flows only to the fuse section 106, so that the electrochemical reaction of the electrode active material 103 present in the fuse section 106 is induced, and a short circuit current flows through the fuse section 106 until the electrochemical reaction is completed. In the case of FIG. 11, the left reaction section including the short circuit occurrence point S becomes the fuse section 106, and the short circuit current flows to the fuse section 106 through one current pass part 170. At this time, the reaction section 105 located on the right side of the pattern line does not react or participate in the short circuit.

Since the short circuit current flows intensively through the current pass part 170 connected to the fuse section 106, the temperature of the current pass part 170 increases so that the current pass part 170 may be disconnected. When the current pass part 170 is disconnected, only the fuse section 106 reacts to the short circuit, thereby preventing accidents from occurring when the entire current collector 100 for the electrode reacts to the short circuit to generate a lot of heat and explode the battery. In addition, because only the fuse section 106 reacts to the short circuit due to the peeling parts 160, the remaining reaction section 105, which does not react to the short circuit, may normally exhibit the function of the battery to some extent. Here, the reacting to the short circuit means that a short circuit current flows.

When the short circuit occurs in the reaction section 105 located the upper left side of the current collector 100 for the electrode illustrated in FIG. 12, the electric resistance of the other electrode short-circuited from the short circuit occurrence point S or the reaction section 105 of the short circuit occurrence point S decreases, so that a short circuit current flows to the reaction section 105 where the short circuit occurrence point S is included.

At this time, when the short circuit occurs in the secondary battery including the current collector for the electrode, the short circuit current may flow to the short circuit occurrence point S or to the reaction section 105 including the short circuit occurrence point S through the current pass part 170 located around the short circuit occurrence point S.

Here, the pattern line connecting the peeling parts 160 and the current pass part 170 located around the short circuit occurrence point S may form a fuse section 106 surrounding the short circuit occurrence point S. That is, among the reaction sections 105 divided by the pattern line, the reaction section 105 including the short circuit occurrence point S functions as the fuse section 106.

The current pass part 170 forming the fuse section 106 or the entire current pass part 170 connected to the fuse section 106 is disconnected. All of the current pass parts 170 forming the fuse section 106 or connected to the fuse section 106 need to be disconnected so that the fuse section 106 is electrically disconnected from the remaining reaction sections 105 and an electrochemical reaction may occur only in the fuse section 106. After all of the current pass parts 170 are disconnected, the electrochemical reaction of the electrode active material 103 present in the fuse section 106 is induced, so that a short circuit current flows to the fuse section 106 until the electrochemical reaction is completed.

In the case of FIG. 12, the short circuit current may flow to the fuse section 106 through two current pass parts 170 connected to the fuse section 106 including the short circuit occurrence point S. At this time, the remaining reaction sections 105 do not react or participate in the short circuit.

Since a relatively large short circuit current flows through all of the current pass parts 170 connected to or in the fuse section 106, the temperature of the current pass part 170 increases so that the entire current pass part 170 may be disconnected. When the current pass part 170 is disconnected, the short circuit current flows only through the fuse section 106, thereby preventing accidents from occurring when the entire current collector 100 for the electrode reacts to the short circuit to generate a lot of heat and explode the battery. In addition, because only the fuse section 106 reacts to the short circuit due to the peeling parts 160, the remaining reaction section 105, which does not react to the short circuit, may normally exhibit the function of the battery to some extent.

In addition, when there are several current pass parts 170 connected to the fuse section 106, as the current is concentrated in the current pass part 170 relatively close to the short circuit occurrence point S, the conductive materials of the conductive material layers 102 located in the current pass parts 170 are melted sequentially or at once to block the current. At this time, the conductive materials of all of the current pass parts 170 connected to the fuse section 106 including the short circuit occurrence point S are melted and the current pass parts 170 are disconnected to block the current.

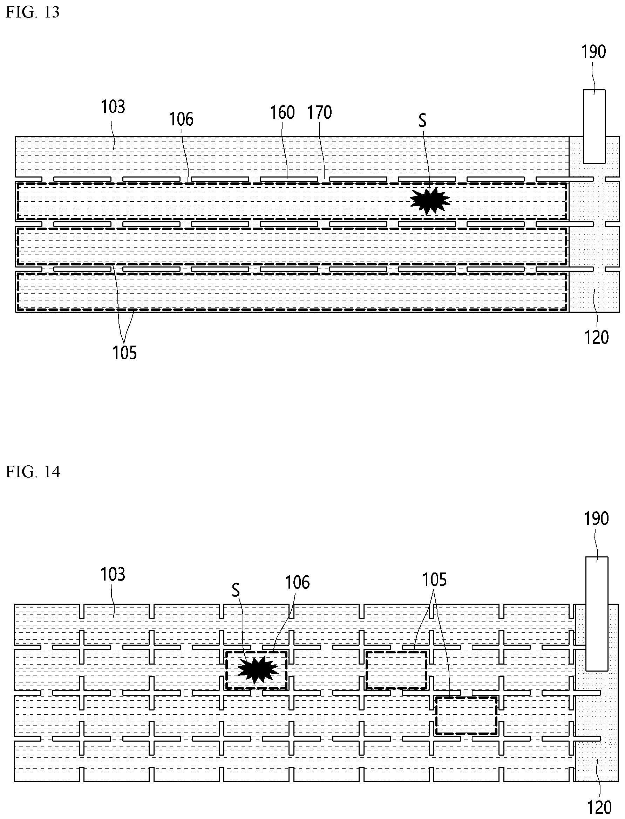

In the case of the current collector 100 for the electrode illustrated in FIG. 13, since the pattern line connecting the peeling parts 160 and the current pass part 170 is disposed in the longitudinal direction of the base film 101, a plurality of reaction sections 105 may be formed in the width direction of the base film 101. In the case of FIG. 13, the peeling parts 160 and the current pass parts 170 may be formed even in a portion where the lead tab 190 is connected.

In the case of the current collector 100 for the electrode illustrated in FIG. 13, all of the current pass parts 170 connected to the fuse section 106 including the short circuit occurrence point S are disconnected to serve as a fuse.

In the case of the current collector 100 for the electrode illustrated in FIG. 14, since the pattern line connecting the peeling parts 160 and the current pass part 170 has a mesh or lattice shape, a plurality of reaction sections 105 may be formed in a mesh or lattice shape. In the case of FIG. 14, the peeling parts 160 and the current pass parts 170 may be formed even in a portion where the lead tab 190 is connected.

In the case of the current collector 100 for the electrode illustrated in FIG. 14, the fuse section 106 including the short circuit occurrence point S may be formed in substantially the same size as the reaction section 105. Four current pass parts 170 are connected to the fuse section 106, and all the four current pass parts 170 are disconnected to serve as a fuse.

Compared to FIGS. 11 and 12, in the case of the current collector 100 for the electrode illustrated in FIGS. 13 and 14, the size of the fuse section 106 including the short circuit occurrence point S is much small. Accordingly, since the short circuit reaction occurs only in a portion divided by the peeling parts 160 and the current pass part 170, that is, a small fuse section 106, the length or size of a portion of the current collector 100 for the electrode that reacts with the short circuit current may be reduced, and heat may be generated only in a portion of the current collector 100 for the electrode other than the entire current collector 100 for the electrode. In addition, since only the electrode active material 103 in the fuse section 106 reacts when short-circuited, dissipation energy may also be reduced. In addition, the remaining reaction sections 105 except for the fuse section 106 may normally exhibit the function of the current collector for the electrode to some extent.

In the current collector 100 for the electrode according to an embodiment of the present invention, the peeling parts 160 and the current pass parts 170 forming the fuse section 106 or surrounding the fuse section 106 may isolate the fuse section 106 from other reaction sections 105 so that the short circuit reaction caused by the short circuit current occurs only in the fuse section 106.

As such, in the current collector 100 for the electrode according to an embodiment of the present invention, the current pass part 170 is formed between the peeling pars 160 formed by removing only the conductive material forming the conductive material layer 102 on the upper surface or lower surface of the base film 101 or removing the conductive material and the electrode active material 103 at once, thereby isolating and separating a portion (fuse section 106) participating in the short circuit reaction from the other portion (reaction section 105) and preventing the entire current collector 100 for the electrode from participating in the short circuit reaction.

Meanwhile, referring to FIGS. 11 to 14, a plurality of peeling parts 160 are formed on the same line (on the pattern line) and at least one current pass part 170 is formed, and the peeling parts 160 and the current pass part 170 located on the same line (pattern line) may have different lengths or sizes.

As described above, in the current collector 100 for the electrode according to an embodiment of the present invention, the conductive material layer 102 and the electrode active material 103 are applied on the upper surface or the lower surface of the base film 101 and then the conductive material layer 102 and a portion of the electrode active material 103 are removed at once using laser patterning to form the peeling parts 160.

In addition, the peeling parts 160 may be formed by applying the conductive material layer 102 on the upper surface or the lower surface of the base film 101 and then coating (applying) the electrode active material 103 on the surface of the conductive material layer 102 while a portion of the conductive material is removed using laser patterning. In this case, since the surface of the base film 101 is exposed to the peeling parts 160 from which the conductive material has been removed, the electrode active material 103 may be coated (applied) on the surface of the base film 101 located in the peeling parts 160.

As a result of forming the peeling parts 160 as described above, the current pass part 170 may also be obtained.

While the electrode active material 103 is pressed on the surface of the conductive material layer 102, the conductive material of the conductive material layer 102 and a portion of the electrode active material 103 may also be removed at once using laser patterning, and before the electrode active material 103 is pressed, only the conductive material of the conductive material layer 102 may also be removed by laser patterning.

While the electrode active material 103 is not pressed on the conductive material layer 102, only the conductive material of the conductive material layer 102 is partially removed using laser patterning, and then when the electrode active material 103 is pressed on the surface of the conductive material layer 102, the electrode active material 103 may be coated on the surface of the base film 101 located in the peeling parts 160. However, since the resistance of the electrode is large, the current flowing through the electrode active material 103 is extremely small compared to the current flowing through the conductive material layer 102. Therefore, even when the electrode active material 103 is coated on the peeling parts 160, if the conductive material layer 102 is disconnected, the flow of current is limited and a short circuit current is formed small, thereby reducing the heat generation.

As such, by forming the peeling parts 160 and the current pass parts 170, a large amount of short circuit current flows to the current pass part 170 close to a short circuit occurrence point when the short circuit occurs to induce the disconnection of the corresponding current pass part 170, thereby securing the battery safety. However, when the short circuit occurs, a short circuit current may flow not only in the current pass part 170 close to the short circuit occurrence point, but also in other current pass parts 170. However, by inducing a much more current to flow in the current pass part 170 close to the short circuit occurrence point, a portion of the current collector involved in the short circuit may be minimized.

Meanwhile, the inventors of the present invention determined that the size (length) of the current pass part 170 is an important parameter that is determined so that the current pass part 170 is disconnected in the event of a short circuit. To confirm this, an experiment was conducted on what conditions the current pass part was disconnected while changing the size of the current pass part 170 and the current. The experimental results were shown in Table 4 below.
(1) Specimen: Aluminum conductive materials of 0.5 µm or less were coated on 12 µm Pet (base film) + both surfaces by sputtering
(2) Laser
   - LSF20D by HG tech Co., Ltd.
   - 30 W integrated laser
   - Laser wavelength: 1,064 ± 1.0 nm
   - Average output power: 30 ± 0.8 W
(3) Experimental conditions: Based on loading level of 12.5 mg/cm², speed 300 mm/s, power 60%
(3) Experimental method: Performed to a point where the current value drops to about 0 A by gradually increasing a current using a power supply and insulating the current and measured and recorded the current value just before dropping to 0 A

**[Table 4]**

| Specimen | 1 | 2 | 3 | 4 | 5 | 6 |
|---|---|---|---|---|---|---|
| | Current (A) | Current (A) | Current (A) | Current (A) | Current (A) | Current (A) |
| #1 | 8.4 | 8.8 | 8.6 | 8.6 | 8.7 | 8.5 |
| #2 | 4.9 | 4.8 | 5.4 | 5.1 | 6.8 | 5.2 |
| #3 | 4.5 | 4.0 | 4.6 | 4.8 | 4.5 | 4.3 |
| #4 | 4.0 | 6.4 | 4.4 | 4.4 | 4.4 | 4.9 |
| #5 | 3.2 | 3.3 | 3.3 | 3.3 | 3.2 | 3.3 |

The experiment of Table 4 was performed on the current collector 100 for the positive electrode in which the plurality of peeling parts 160 and current pass parts 170 were alternately formed in the width direction of the current collector as illustrated in FIGS. 5 and 6. That is, an experiment was performed on a lithium secondary battery using the current collector 100 for the positive electrode.

In Table 4, in Specimen #1, 10 current pass parts 170 having an individual length of 0.5 mm were formed, in Specimen #2, 5 current pass parts 170 having an individual length of 1 mm were formed, in Specimen #3, 4 current pass parts 170 having an individual length of 1.25 mm were formed, in Specimen #4, 2 current pass parts 170 having an individual length of 2.5 mm were formed, and in Specimen #5, one current pass part 170 having a length of 5.0 mm was formed.

Here, the length of the current pass part 170 was a length measured along the direction of the pattern line formed by the peeling parts 160 and the current pass part 170, and the sum of the total lengths of the current pass parts 170 formed in each specimen was 5 mm.

Table 4 records the current values at which the current (A) value increased and the current pass part 170 was disconnected. The experiment was repeated a total of 6 times for each specimen.

As a result of the experiment, it was confirmed that if the length of the current pass part 170 was 1 mm or more, the current pass part was disconnected even when the current value was small.

As shown in Table 4, it may be seen that if the current pass part 170 is divided into small sizes, the current value functioning as a fuse further increases. Since it is advantageous that the current pass part 170 is disconnected at a small current, it is preferred to set the size of the current pass part 170 to be 1 mm or more as in Specimen #2.

Therefore, when the current collector 100 for the electrode according to an embodiment of the present invention is a current collector for a positive electrode, it is preferable that one or a plurality of (at least one) current pass parts 170 with a length of 1 mm or more are formed.

In the current collector 100 for the electrode according to an embodiment of the present invention described above, the region applied with the electrode active material 103 is divided into a plurality of reaction sections 105 by the peeling parts 160 and the current pass parts 170 and the plurality of reaction sections 105 may exhibit the function of the electric fuse in the short circuit, respectively.

Accordingly, in the current collector 100 for the electrode according to an embodiment of the present invention, even if the short circuit occurs, the short circuit reaction occurs only in a reaction section including a short circuit occurrence point or the reaction section is isolated from other reaction sections, thereby securing the safety of the battery. Particularly, when the current collector 100 for the electrode is the current collector for the positive electrode, it is possible to prevent accidents such as fire or explosion of the battery due to a short circuit when used in large-capacity lithium secondary batteries.

As described above, the present invention has been described by specified matters such as detailed components, and the like and limited embodiments and drawings, but the description is just provided to assist more overall understanding of the present invention and the present invention is not limited to the embodiment and various modifications and changes may be made by those skilled in the art from such a disclosure. Therefore, the spirit of the present invention should not be defined only by the described embodiments, and it should be appreciated that claims to be described below and all which are equivalent to the claims or equivalently modified to the claims are included in the scope of the spirit of the present invention.

## Claims

1. A current collector for an electrode comprising:
a base film;
a conductive material layer, which is formed on at least one of an upper surface and a lower surface of the base film and includes a conductive material; and
an electrode active material formed on the surface of the conductive material layer,
wherein the conductive material layer includes peeling parts formed by the absence or removal of the conductive material so that the base film is exposed; and a current pass part which is located between the peeling parts and has the conductive material on the surface of the base film.

2. The current collector for the electrode of claim 1, wherein the peeling parts are formed by the absence or removal of the conductive material so that at least one surface of the upper and lower surfaces of the base film is exposed or include the electrode active material formed on at least one surface of the upper and lower surfaces of the base film exposed by the absence or removal of the conductive material.

3. The current collector for the electrode of claim 2, wherein the current pass part is formed to have the conductive material on at least one surface of the upper and lower surfaces of the base film.

4. The current collector for the electrode of claim 3, wherein the current pass part includes the electrode active material which is formed on the surface of the conductive material which is present on at least one surface of the upper and lower surfaces of the base film.

5. The current collector for the electrode of claim 2, wherein the current pass part is located between the peeling parts along an arrangement direction of the peeling part or located between the peeling parts along a pattern direction formed by connecting the peeling parts and the current pass part.

6. The current collector for the electrode of claim 4, wherein the area of the conductive material layer or the area of the electrode active material is divided into a plurality of reaction sections by a pattern line formed by connecting the peeling parts and the current pass part.

7. The current collector for the electrode of claim 6, wherein when a short circuit occurs in a secondary battery including the current collector for the electrode, a short circuit current flows into a short circuit occurrence point through the current pass part located around the short circuit occurrence point.

8. The current collector for the electrode of claim 7, wherein among the reaction sections, a reaction section where the short circuit occurrence point is located becomes a fuse section that functions as an electrical fuse,
the current pass part forming the fuse section or the entire current pass part connected to the fuse section is disconnected, and while all of the current pass parts are disconnected, an electrochemical reaction of the electrode active material present in the fuse section is performed.

9. The current collector for the electrode of claim 7, wherein all of the current pass parts forming the fuse section or connected to the fuse section are disconnected to induce the electrochemical reaction of the electrode active material present in the fuse section while the fuse section is electrically isolated and a short circuit current flows into the fuse section until the electrochemical reaction is completed.

10. The current collector for the electrode of claim 8, wherein the peeling parts and the current pass part forming the fuse section or surrounding the fuse section isolate the fuse section from the reaction section or isolate or separate the fuse section participating in the short circuit reaction from the reaction section, so that a short circuit reaction due to the short circuit current occurs only in the fuse section.

11. The current collector for the electrode of claim 10, wherein a plurality of peeling parts is formed on the same line as the pattern line formed by connecting the peeling parts and the current pass part,
at least one current pass part is formed on the same line, and
the peeling parts and the current pass part located on the same line have different lengths or sizes.

12. The current collector for the electrode of claim 6, wherein the base film is made of a transparent material.

13. The current collector for the electrode of claim 12, wherein the peeling parts and the current pass part are formed to be symmetrical on the upper and lower surfaces of the base film.

14. The current collector for the electrode of claim 12, wherein the peeling parts and the current pass part are formed to be symmetrical on the upper and lower surfaces of the base film by laser patterning.
